# EUROPÄISCHE PATENTSCHRIFT

(11) **EP 2 881 813 B1**
(45) Veröffentlichungstag und Bekanntmachung des Hinweises auf die Patenterteilung: **27.07.2016**
(21) Anmeldenummer: 13195692.2
(22) Anmeldetag: 04.12.2013
(51) Int. Cl.: G05B 19/042

(54) **Feldgerätevorrichtung und Verfahren zum Kommunizieren einer Feldgerätevorrichtung mit einer Auswerteeinrichtung**
Field device and method for communication of a field device with an evaluation unit
Dispositif d'appareil de terrain et procédé de communication entre un dispositif d'appareil de terrain et une installation d'exploitation

(43) Veröffentlichungstag der Anmeldung: 10.06.2015
(73) Patentinhaber: VEGA Grieshaber KG, 77709 Wolfach (DE)
(72) Erfinder: Isenmann, Andreas, 77716 Haslach i.K. (DE)
(74) Vertreter: Maiwald Patentanwalts GmbH

(56) Entgegenhaltungen:
- EP-A1- 1 207 373
- EP-A1- 2 489 308
- JP-A- 2010 278 553
- US-A1- 2010 245 931
- US-A1- 2012 127 523

## Beschreibung

### Technisches Gebiet der Erfindung

Die Erfindung betrifft das Gebiet der Messtechnik. Insbesondere betrifft die vorliegende Erfindung eine Feldgerätevorrichtung und ein Verfahren zum Kommunizieren einer Feldgerätevorrichtung mit einer Auswerteeinrichtung.

### Hintergrund der Erfindung

Ein Feldgerät oder eine Feldgerätevorrichtung dienen bei der Erledigung einer Messaufgabe dazu, eine physikalische Messgröße zu erfassen. Die physikalische Messgröße kann beispielsweise eine Laufzeit, eine Entfernung, ein Druck, ein Durchfluss oder eine Temperatur sein. Aus der gemessenen physikalischen Messgröße kann eine interessierende Messgröße abgeleitet werden. Die interessierende Messgröße kann beispielsweise ein Füllstand in einem Behälter sein, der aus einer physikalischen Signallaufzeit ermittelt wird. Für die Signallaufzeitermittlung kann ein Radarsignal eingesetzt werden.

Das Feldgerät muss zum physikalischen Messen oftmals an einem Ort eingesetzt werden, der sich weit entfernt von dem Ort eines zugehörigen Anzeigegeräts, weit entfernt von dem Ort einer Auswerteeinrichtung und/oder weit entfernt von dem Ort einer Bedieneinrichtung befindet. Eine Auswerteeinrichtung und/oder Bedieneinrichtung befindet sich nämlich oftmals in einer zentralen Warte oder in einem zentralen Steuerzentrum (Control Center). Die Auswerteeinrichtung muss daher oftmals über eine weite Distanz mit den von dem Feldgerät generierten Messwerten versorgt werden. Zur Überbrückung dieser weiten Strecken können direkte Drahtverbindungen eingesetzt werden. Jedoch können anstatt der direkten Drahtverbindungen auch Kommunikationsnetze eingesetzt werden, die zwischen einer Auswerteeinrichtung und dem Feldgerät angeordnet sind. Die Verbindung zu einem Kommunikationsnetz kann abhängig von dem Einsatzzweck drahtgebunden oder drahtlos erfolgen. Das Kommunikationsnetz kann selbst auch drahtlose oder drahtgebundene Übertragungstechniken in jeder Kombination verwenden, um zumindest zwei entfernte Orte miteinander zu verbinden. Als Übertragungsmedium kann sowohl ein privates als auch ein öffentliches Kommunikationsnetz genutzt werden.

Zum Zugang zu einem Kommunikationsnetz kann eine drahtlose Übertragungstechnik wie GSM (Global System for Mobile Communications), UMTS (Universal Mobile Telecommunications System), GPRS (General Packet Radio Service) oder LTE (Long Term Evolution) genutzt werden, meist in Abhängigkeit des gewählten Kommunikationsnetzes. Im Gegensatz zu GSM, UMTS, GPRS oder LTE, die sich insbesondere durch eine große Funkreichweite auszeichnen, können auch örtlich begrenztere drahtlose Zugangstechnologien genutzt werden, wie beispielsweise WLAN (Wireless Local Area Network), das oft auf einem Standard der IEEE-802.11-Protokollfamilie basiert, WiFi™, ZigBee oder Bluetooth^{®}. Ein Beispiel für eine drahtgebundene Zugangstechnologie ist der Einsatz einer Modem-Verbindung oder eines DSL-Links (Digital Subscriber Line).

Ist jedoch ein Feldgerät oder eine Feldgerätevorrichtung für die Kommunikation über ein Kommunikationsnetz vorbereitet, so ist dieses Feldgerät auch darauf angewiesen, dass das Kommunikationsnetz im Wesentlichen immer verfügbar ist. Sollte das Kommunikationsnetz ausfallen, kann keine Übertragung von Daten und insbesondere von Messwerten mehr erfolgen.

Ein mobiles Endgerät oder mobiles User Equipment (UE), beispielsweise ein Smartphone, kann einen Tethermode aufweisen, bei dem eine Verbindung eines Smartphones mit einem PC (Personal Computer) hergestellt wird, um dem PC eine Internetverbindung über GSM/UMTS zu ermöglichen. Das mobile Endgerät übernimmt damit die Rolle eines Modems.

Die Druckschrift EP 2 489 308 A1 betrifft eine radiografische Abbildungseinrichtung und eine Einrichtung zum Einstellen eines Modus.

Die Druckschrift JP 2010 278553 A betrifft ein drahtloses Feldgerät, das einen Schlafbetrieb durchführen kann, um Energie zu sparen.

Die Druckschrift US 2012/127523 A1 beschreibt eine Druckeinrichtung und ein Endgerät, welche ihre Kommunikationsmodi umschalten können.

Die Druckschrift US 2010/245931 A1 beschreibt ein Bildübertragunssystem.

### Zusammenfassung der Erfindung

Es mag ein Bedarf bestehen, eine Feldgerätevorrichtung mit einer Auswerteeinrichtung und/oder Bedieneinrichtung flexibel zu verbinden.

Es wird eine Feldgerätevorrichtung und ein Verfahren zum Kommunizieren einer Feldgerätevorrichtung mit einer Auswerteeinrichtung beschrieben. Der Gegenstand der vorliegenden Erfindung wird von den Merkmalen der unabhängigen Patentansprüche bestimmt. Ausführungsbeispiele der Erfindung sind in den abhängigen Ansprüchen angegeben.

Gemäß einem Aspekt der vorliegenden Erfindung wird eine Feldgerätevorrichtung beschrieben, welche eine Messeinrichtung und eine Kommunikationseinrichtung aufweist. Die Messeinrichtung ist zum Bestimmen eines Messwerts und zum Kommunizieren mit der Kommunikationseinrichtung eingerichtet. Das Bestimmen des Messwertes und das Kommunizieren mag unabhängig voneinander ablaufen. Die Kommunikationseinrichtung ist eingerichtet für eine Verbindung mit einer Auswerteeinrichtung und/oder für eine Verbindung mit einer Bedieneinrichtung einen Betriebsmodus einzustellen oder einzunehmen. Der Betriebsmodus ist aus einem ersten Betriebsmodus und einem zweiten Betriebsmodus wählbar. In einem Beispiel mag beim Auswählen des Betriebsmodus der ausgewählte Betriebsmodus aktiviert werden während gleichzeitig der andere Betriebsmodus deaktiviert werden mag. Der erste Betriebsmodus ermöglicht eine indirekte Verbindung der Kommunikationseinrichtung mit der Auswerteeinrichtung und/oder mit der Bedieneinrichtung indem ein Kommunikationsnetz genutzt wird. Der zweite Betriebsmodus ermöglicht eine direkte Verbindung der Kommunikationseinrichtung mit der Auswerteeinrichtung und/oder mit der Bedieneinrichtung. Die indirekte und die direkte Verbindung sieht die Nutzung derselben Übertragungstechnik vor. Insbesondere mag die Nutzung der selben Übertragungseinrichtung oder der selben Kommunikationseinrichtung in der Feldgerätevorrichtung vorgesehen sein. In einem Beispiel mag die Übertragungstechnik ein Kommunikationsprotokoll oder einen Kommunikationsstandard aufweisen.

Gemäß einem anderen Aspekt der vorliegenden Erfindung wird ein Verfahren zum Kommunizieren einer Feldgerätevorrichtung mit einer Auswerteeinrichtung beschrieben. Das Verfahren weist das Bestimmen eines Messwertes mit einer Messeinrichtung auf. Dieses Bestimmen des Messwertes mag unabhängig von den übrigen Funktionen innerhalb der Feldgerätevorrichtung ablaufen, beispielsweise unabhängig von einer Kommunikationsfunktion. Das Verfahren mag ferner das Kommunizieren der Messeinrichtung mit einer Kommunikationseinrichtung aufweisen. So kann beispielsweise die Messeinrichtung einen ermittelten Messwert an die Kommunikationseinrichtung weitergeben und/oder die Kommunikationseinrichtung kann einen Parameter an die Messeinrichtung weitergeben, um diesen Parameter einzustellen, d.h. um die Messeinrichtung zu parametrieren. Für das Verbinden mit einer Auswerteeinrichtung mag das Verfahren das Einstellen eines Betriebsmodus vorsehen, der aus einem ersten Betriebsmodus und einem zweiten Betriebsmodus wählbar ist. Wenn der erste Betriebsmodus eingestellt ist, wird eine indirekte Verbindung über ein Kommunikationsnetz mit der Auswerteeinrichtung ermöglicht und wenn der zweite Betriebsmodus eingestellt ist wird eine direkte Verbindung ermöglicht. Die indirekte und die direkte Verbindung sieht die Nutzung derselben Übertragungstechnik vor, insbesondere die Nutzung desselben Übertragungsprotokolls und/oder desselben Protokollstacks. In einem Beispiel mag der erste Betriebsmodus von dem zweiten Betriebsmodus dadurch unterschieden werden, dass die Kommunikationseinrichtung in dem ersten Betriebsmodus aktiv eine Verbindung mit einem Kommunikationsnetz herstellen kann, während sie in dem zweiten Betriebsmodus auf eine Anfrage zum Aufbauen einer Verbindung von der Auswerteeinrichtung wartet. Eine Verbindung kann aktiv hergestellt werden, wenn an das Kommunikationsnetz eine Anfrage zum Aufbauen einer Verbindung geschickt wird. Diese Anfrage mag dann mit einer Anfrage nach Zugangsdaten erwidert werden.

Gemäß noch einem anderen Aspekt der vorliegenden Erfindung wird ein computerlesbares Speichermedium angegeben, auf dem ein Programmcode gespeichert ist, der, wenn er von einem Prozessor ausgeführt wird, das erfindungsgemäße Verfahren ausführt.

Gemäß noch einem anderen Aspekt der vorliegenden Erfindung mag ein Programmprodukt beschrieben werden, welches Befehle aufweist, die, wenn sie von einem Prozessor ausgeführt werden, das erfindungsgemäße Verfahren ausführen.

Ein computerlesbares Speichermedium mag eine Floppy Disk, eine Festplatte, ein USB (Universal Serial Bus) Speichermedium, ein RAM (Random-Access Memory), ein ROM (Read-Only Memory) oder ein EEPROM (electrically Erasable Programmable Read-Only Memory) sein. Als computerlesbares Speichermedium kann auch ein Kommunikationsnetzwerk, wie das Internet, angesehen werden, welches das Aufspielen oder Herunterladen von Programmcode ermöglichen mag.

Die Kommunikationseinrichtung ist mit einer Auswerteeinrichtung und/oder mit einer Bedieneinrichtung wahlweise über ein Kommunikationsnetz indirekt verbindbar oder im Wesentlichen ohne der Zwischenschaltung eines Netzes direkt verbindbar. Die Feldgerätevorrichtung mag also vorsehen, dass sowohl eine Verbindung mit der Auswerteeinrichtung über ein Kommunikationsnetz herstellbar ist, als auch, dass ein direkter Anschluss der Auswerteeinrichtung an der Feldgerätevorrichtung möglich ist.

In anderen Worten mag die Kommunikationseinrichtung eingerichtet sein, wahlweise eine Verbindung zu einem Kommunikationsnetz herzustellen oder einen Verbindungswunsch von einer anderen Einrichtung zu akzeptieren. In einem Beispiel mag die Kommunikationseinrichtung auch eingerichtet sein, gleichzeitig eine Verbindung mit einem Kommunikationsnetz herstellen zu können und einen Verbindungswunsch von einer anderen Einrichtung zu akzeptieren, um eine Verbindung mit der anderen Einrichtung herzustellen, beispielsweise über zumindest zwei unterschiedliche Schnittstellen oder Ports, mit jeweils unterschiedlichen oder gleichen Zugangsdaten. Die Verbindung, die die Kommunikationseinrichtung mit einem anderen Netz herstellt, mag als "eigene Verbindung" der Feldgerätevorrichtung bezeichnet werden. Zum Herstellen der Verbindungen in verschiedenen Betriebsmodi zur gleichen Zeit können mehrere Kommunikationseinrichtungen vorhanden sein oder auf einer einzigen Kommunikationseinrichtung, welche den parallelen Betrieb in unterschiedlichen Betriebsmodi ermöglicht, kann eine Vielzahl von Schnittstellen vorhanden sein, die entweder die gleichen oder unterschiedliche Zugangsdaten nutzen und unabhängig voneinander betrieben werden können.

Eine Verbindung, die dadurch zustande gekommen ist, dass die Kommunikationseinrichtung selbst eine Verbindung zulässt oder annimmt mag als "fremde Verbindung" der Feldgerätevorrichtung bezeichnet werden. Die eigene Verbindung mag im Unterschied zu einer fremden Verbindung durch aktives Aufbauen der Verbindung zustande gekommen sein.

Bei einer eigenen Verbindung mag die Kommunikationseinrichtung die Rolle eines Client einnehmen. Bei einer fremden Verbindung mag die Kommunikationseinrichtung die Rolle eines Servers einnehmen. Das wahlweise Verbinden mag durch ein Umschalten eines Betriebsmodus realisierbar sein und insbesondere durch das Umschalten der Rolle, welche die Kommunikationseinrichtung innerhalb der jeweiligen Verbindung einnimmt, also ob sie eine Verbindung initiiert oder auf einen Verbindungswunsch reagiert. Die Übertragungstechnik, die für die jeweilige Verbindung genutzt wird, ist dieselbe Übertragungstechnik für die eigenen Verbindung und für die fremde Verbindung. Die Übertragungstechnik mag in einem Beispiel die Hardware bezeichnen, die für den Verbindungsaufbau und die Kommunikation zuständig ist, insbesondere die Protokolle, die verwendet werden, beispielsweise GSM, LTE, UMTS, IEEE 802.x. Ferner mag immer der selbe Port oder die selbe Schnittstelle genutzt werden, der/die lediglich in unterschiedlichen Richtungen betrieben wird. Es mag daher ausreichen lediglich einen einzigen Kommunikationsstandard oder ein einziges Kommunikationsprotokoll auf der Kommunikationseinrichtung zu realisieren. Die eigene Verbindung kann auch lediglich eine Zugangsverbindung zu einem Kommunikationsnetz sein, welches jedoch im Backbone eine andere Technologie einsetzt. In der Kommunikationseinrichtung selbst mag jedoch keine Protokollumsetzung stattfinden. Die Kommunikationseinrichtung mag homogen bezüglich der Protokolle sein.

Bei einer drahtgebundenen Verbindung kann das Umschalten einer Rolle auch das Umschalten einer physikalischen Eigenschaft oder Schnittstelle aufweisen. Beispielsweise kann die Rolle umgeschaltet werden, indem die Kommunikation als Quelle oder Senke eingerichtet wird. In einem Beispiel ist die Kommunikationseinrichtung zum Bereitstellen des Messwertes und/oder zum Empfangen eines Kommandos eingerichtet.

Als Auswerteeinrichtung mag nicht nur eine Signalverarbeitungseinrichtung zum Bestimmen oder Umrechnen von Messwerten verstanden werden, sondern beispielsweise auch eine Bedieneinrichtung, mit der Befehle oder Kommandos an die Feldgerätevorrichtung abgegeben werden können. Unter einer Auswerteeinrichtung mag aber auch eine Anzeigeeinrichtung oder ein Anzeigegerät verstanden werden, welches einen ermittelten Messwert darstellen kann. Eine Auswerteeinrichtung mag daher zum Auswerten eines Messergebnisses, zum Parametrieren, d.h. zu dem Setzen eines Parameters der Feldgerätevorrichtung, zum Anzeigen des Messergebnisses und/oder zum Bedienen der Feldgerätevorrichtung eingerichtet sein. Insbesondere mag die Messeinrichtung durch die Auswerteeinrichtung beeinflussbar oder steuerbar sein. Im Wesentlichen mag sich eine Auswerteeinrichtung und eine Bedieneinrichtung in der Flussrichtung der Information unterscheiden, welche die jeweilige Einrichtung verarbeitet oder bereitstellt. Bei der Auswertung eines Messwertes mag die Information von der Feldgerätevorrichtung zu der Auswerteeinrichtung fließen. Beim Bedienen mag die Information von der Auswerteeinrichtung zu der Feldgerätevorrichtung fließen. Beispielsweise mag der physikalische Messwert in der Feldgerätevorrichtung in einen Füllstand gewandelt werden. Oftmals weist die Feldgerätevorrichtung für die Wandlung eine Signalverarbeitungseinrichtung auf, die Rohdaten, d.h. die unverarbeiteten physikalischen Messwerte, empfängt und in einen Füllstand wandelt. Es ist aber auch denkbar, dass die physikalischen Rohwerte, Rohdaten oder Rohmessdaten zu einer Auswerteeinrichtung gesendet und dort in einen Füllstand gewandelt werden. Dann kann die Feldgerätevorrichtung ohne einer Signalverarbeitungseinrichtung betrieben werden. In einem anderen Ausführungsbeispiel ist aber auch möglich, dass ein aus den Rohdaten ermittelter Füllstand zur Auswerteeinrichtung gesendet wird und dort dann daraus ein Volumen berechnet wird. Für die Volumensberechnung ist in der Auswerteeinrichtung eine entsprechende Signalverarbeitungseinrichtung vorgesehen, die in einem weiteren Verarbeitungsschritt eine andere Messgröße ermittelt.

Durch das Vorsehen des wahlweisen Verbindens über ein Kommunikationsnetz oder über eine Direktverbindung kann ein einfacher oder flexibler Verbindungsaufbau zu einer Feldgerätevorrichtung oder zu einem Feldgerät ermöglicht werden. Insbesondere kann berücksichtigt werden, dass oftmals ein Kommunikationsnetz außer Reichweite der Feldgerätevorrichtung und/oder der Auswerteeinrichtung liegt, wohingegen sich die Auswerteeinrichtung und die Feldgerätevorrichtung in unmittelbarer Nähe befinden. Auch kann ein Ausfall eines Kommunikationsnetzes toleriert werden, da trotz einem Ausfall der Verbindung über das Kommunikatonsnetz noch die wahlweise Alternative einer direkten Verbindung zwischen Feldgerätevorrichtung und Auswerteeinrichtung existiert, durch das Herstellen einer fremden Verbindung. Die Verbindungsparameter sind in der Feldgerätevorrichtung abgespeichert und mögen in beiden Betriebsmodi genutzt werden.

Für das Bereitstellen der direkten Verbindung und der indirekten Verbindung mag in einem Beispiel dasselbe Kommunikationsprotokoll verwendet werden, beispielsweise ein Protokoll aus der Familie IEEE 802.11. Durch die Wahl des Kommunikationsprotokoll für die indirekte Verbindung mag somit auch die Wahl des Kommunikationsprotokolls der direkten Verbindung festgelegt sein. In anderen Worten mag die Kommunikationseinrichtung nur einen einzigen Protokollstack aufweisen. Die Auswahl, ob eine direkte Verbindung oder eine indirekte Verbindung zum Einsatz kommt, mag festlegen, ob die Kommunikationseinrichtung eine Verbindungsanfrage initiieren kann oder terminieren kann.

Damit ein Verbindungsaufbau zu einer Feldgerätevorrichtung oder zu einem Feldgerät über ein drahtloses Netz oder ein drahtgebundenes Netz erfolgen kann, mögen in der Feldgerätevorrichtung Zugangsdaten gespeichert sein. Bei einer Anmeldung an einem Kommunikationsnetz mögen von dem Kommunikationsnetz die Authentifizierungsdaten oder die Zugangsdaten von der Feldgerätevorrichtung abgefragt werden. Für die Anmeldung an einem Kommunikationsnetz mag der erste Betriebsmodus oder der indirekte Betriebsmodus eingestellt, ausgewählt oder konfiguriert sein. In dem indirekten Betriebsmodus, in dem sich die Feldgerätevorrichtung bei dem Kommunikationsnetz anmeldet, nimmt das Kommunikationsnetz, insbesondere ein Netzknoten des Kommunikationsnetzes, der die Zugangsdaten kennt, die Rolle eines Authentifizierungsservers ein. Die Feldgerätevorrichtung nimmt die Rolle eines Authentifizierungsclients ein. Der Client mag also eine eigene Verbindung aufbauen.

Die Zugangsdaten zu dem Kommunikationsnetz mögen jedoch in der Feldgerätevorrichtung gespeichert sein. Mit diesen Zugangsdaten kann sich die Feldgerätevorrichtung bei dem Kommunikationsnetz authentifizieren. In einem Beispiel mag ein Schlüssel als Zugangsdatum verwendet werden. Zusätzlich zu einem Schlüssel kann auch noch ein Netzwerkname verlangt werden. Im Beispiel eines WLAN Netzes oder Wi-Fi Netzes ist der Netzwerkname die sog. SSID (Service Set Ientification). Der Schlüssel hängt von dem jeweils eingesetzten Authentifizierungsprotokoll ab. Beispiele für Authentifizierungsprotokolle im Bereich eines Wireless LAN (WLAN) sind Wired Equivalent Privacy (WEP), Wi-Fi Protected Access (WPA) oder WPA2. Ferner kann ein Temporal Key Integrity Protocol (TKIP) verwendet werden. Zur Authentifizierung von Teilnehmern kann auch ein Pre-Shared Key (PSK) oder Extensible Authentication Protocol (EAP) verwendet werden. Als zugrunde liegendes Übertragungsprotokoll kann für den Zugang zu einem WLAN der IEEE Standard 802.11 in verschiedenen Ausprägungen, beispielsweise als IEEE 802.11 i, benutzt werden. Zur Authentifizierung kann auch in dem Kommunikationsnetz ein Radiusserver eingesetzt werden. In anderen drahtlosen Zugangsnetzen kann das Wireless Application Protocol (WAP) benutzt werden, um eine Anmeldung an ein Mobilfunknetz, wie GPRS oder UMTS zu ermöglichen.

Gemäß einem anderen Aspekt der vorliegenden Erfindung mag vorgesehen sein, dass die in der Feldgerätevorrichtung gespeicherten Zugangsdaten zu dem Kommunikationsnetz, beispielsweise der Zugangsschlüssel und die SSID, benutzt werden, um selbst einen Zugang für andere Geräte bereitzustellen. Zum Speichern der Zugangsdaten kann beispielsweise ein dafür vorgesehenes Register, ein RAM, ein ROM, eine SIM-Karte oder ein EPROM in der Feldgerätevorrichtung als Speichereinrichtung vorgesehen sein. In anderen Worten mag die Feldgerätevorrichtung wahlweise als Client oder Server in einer Kommunikationsbeziehung verwendet werden. Wenn sich die Feldgerätevorrichtung in einem Kommunikationsnetz anmeldet, um mit einer Auswerteeinrichtung, Bedieneinrichtung oder Anzeigeeinrichtung zu kommunizieren, stellt die Feldgerätevorrichtung auf eine Anfrage oder auf einen Request des Kommunikationsnetzes die Zugangsdaten zur Verfügung. Bietet die Feldgerätevorrichtung jedoch selbst ein Zugangsnetz für andere Einrichtungen, wie eine Auswerteeinrichtung, Anzeigeeinrichtung oder Bedieneinrichtung an, so sendet die Feldgerätevorrichtung die Anfrage nach Zugangsdaten an die anzumeldende Einrichtung, so dass diese sich authentifiziert. Die in der Feldgerätevorrichtung gespeicherten Zugangsdaten werden dann genutzt, um die Einrichtung zu authentifizieren, die sich auf direktem Wege mit der Feldgerätevorrichtung verbinden möchte. Die von dieser Einrichtung bereitgestellten Authentifizierungsdaten werden in der Feldgerätevorrichtung verifiziert. Für die direkte Verbindung mag die Feldgerätevorrichtung das Kommunikationsnetz nachbilden oder simulieren.

Die Anfrage nach den Zugangsdaten läuft in der Regel in der Umgekehrten Richtung ab, wie die Anfrage nach dem Aufbau einer Verbindung, d.h. umgekehrt zur Verbindungsanforderung.

Eine Auswerteeinrichtung mag eine Anzeigeeinrichtung zum Darstellen eines Messwertes und auch eine Bedieneinrichtung zum Parametrieren der Feldgerätevorrichtung aufweisen. Um einen Informationsaustausch zwischen Feldgerätevorrichtung und Auswerteeinrichtung zu gewährleisten, mag eine zusätzliche Kommunikationsverbindung aufgebaut werden. Beispielsweise mag der Zugang zu dem Kommunikationsnetz und/ oder die direkte Verbindung der Feldgerätevorrichtung mit der Auswerteeinrichtung auf einer unteren Ebene des OSI (Open Systems Interconnection) -Schichtenmodells liegen. In einem Beispiel kann es sich jeweils bei der indirekten Verbindung und der direkten Verbindung um eine Punkt-zu-Punkt-Verbindung oder um eine Schicht-2-Verbindung handeln. Ermittelte Messwerte, Parametrierungsdaten (parameters to be set), Abfragebefehle, Kommandos an das Feldgerät oder von dem Feldgerät können auf einer höheren Schicht, beispielsweise der Schicht 3 abgehandelt werden. Für die Kommunikation auf einer höheren Schicht können verbindungslose oder verbindungsorientierte Protokolle eingesetzt werden. Es können auch Tunnelverbindungen zwischen der Feldgerätevorrichtung und der Auswerteeinrichtung eingesetzt werden. Als Auswerteeinrichtung kann auch ein Teilnehmerendgerät, wie ein PC, ein Computer, ein mobiles Gerät, wie ein Notebook, Smartphone oder Tablet-PC, mit einer entsprechenden geladenen Anwendung oder Applikation genutzt werden. Die Anwendung mag für die Einrichtung der Verbindung und zur Kommunikation genutzt werden.

In einem Beispiel weist das Verfahren zum Kommunizieren die Funktion des Auswählens des Zustandes oder Betriebsmodus auf, der festlegt, ob die Kommunikationseinrichtung über ein Kommunikationsnetz mit einer Auswerteeinrichtung verbindbar ist oder ob die Kommunikationseinrichtung direkt mit der Auswerteeinrichtung verbindbar ist. In anderen Worten mag das Verfahren das Auswählen eines Verbindungsmodus, eines Betriebsmodus oder eines Verbindungszustandes aufweisen, der entscheidet, ob die Kommunikationseinrichtung über ein Kommunikationsnetz mit einer Auswerteeinrichtung verbindbar ist oder ob die Kommunikationseinrichtung direkt mit der Auswerteeinrichtung verbindbar ist. Durch das Versenden einer Verbindungsanforderung mag die Kommunikationseinrichtung mit einem Kommunikationsnetz verbindbar sein. Durch das Warten auf eine Verbindungsanforderung mag die Kommunikationseinrichtung direkt verbindbar sein.

In anderen Worten mag das bedeuten, dass das Verfahren vorsieht auszuwählen, ob die Kommunikationseinrichtung eine Verbindung mit einem Kommunikationsnetz zulässt und/oder ob die Kommunikationseinrichtung eine direkte Verbindung mit einer Auswerteeinrichtung im Wesentlichen ohne der Nutzung eines Kommunikationsnetzes zulässt.

Der Begriff "direkte Verbindung" mag bedeuten, dass im Wesentlichen keine Netzwerkinfrastruktur zwischen der Feldgerätevorrichtung und der Auswerteeinrichtung zum Einsatz kommt. In anderen Worten mag es sich bei einer Direktverbindung um eine tatsächliche Punkt-zu-Punkt-Verbindung mit einer Metrik von 1 handeln. Das mag bedeuten, dass entweder ein direkter Link oder eine direkte Funkverbindung zwischen der Auswerteeinrichtung und der Kommunikationseinrichtung hergestellt wird. Ferner mag das bedeuten, dass tatsächlich die von der Auswerteeinrichtung oder der Kommunikationseinrichtung generierten Signale entsprechend der Kommunikationsrichtung auf der Kommunikationseinrichtung bzw. auf der Auswerteeinrichtung terminiert werden. Ferner mag zwischen der Kommunikationseinrichtung und der Auswerteeinrichtung bei einer direkten Verbindung im Wesentlichen keine Zwischenspeicherung der übertragenen Daten in einem Puffer oder Registerspeicher erfolgen und außerdem mag im Wesentliche keine Protokollumsetzung stattfinden. Bei einer indirekten Verbindung über ein Kommunikationsnetz mag eine Protokollumsetzung zwischen den Kommunikationsendpunkten stattfinden.

Gemäß einem anderen Aspekt der vorliegenden Erfindung mag die Kommunikationseinrichtung zum direkten Verbinden mit der Auswerteeinrichtung ein Kommunikationszugangsnetz bereitstellen. Es wird die gleiche Hardware verwendet, wie zur Verbindung in ein Kommunikationsnetz. In anderen Worten mag eine Kommunikationseinrichtung physikalisch eine Verbindungsmöglichkeit mit einer anderen Einrichtung schaffen. Ob jedoch ein Zugangsnetz angeboten wird hängt davon ab, ob die Kommunikationseinrichtung eingerichtet ist, Zugangsdaten zu verifizieren. Ob eine Anmeldung an einem Zugangsnetz ermöglicht wird hängt davon ab, ob die Kommunikationseinrichtung eingerichtet ist, Zugangsdaten bereitzustellen.

Das Bereitstellen eines Kommunikationszugangsnetzes mittels der Feldgerätevorrichtung, insbesondere mittels der Kommunikationseinrichtung, mag sich durch das Auswählen der Rolle der Feldgerätevorrichtung in einer Kommunikationsbeziehung realisieren lassen.

Der Begriff "Kommunikationszugangsnetz" mag die Tatsache beinhalten, dass die Kommunikationseinrichtung eingerichtet ist, eine Authentifizierung von Auswerteeinrichtungen zu ermöglichen. Im Allgemeinen mag eine Kommunikationseinrichtung eine beliebige Punkt-zu-Punkt-Verbindung ermöglichen. Diese Punkt-zu-Punkt-Verbindung kann drahtlos, also auf Funkbasis, oder drahtgebunden erfolgen, also mittels eines direkt verbundenen elektrischen Kabels. Bei einer solchen Punkt-zu-Punkt-Verbindung mögen empfangene Daten lediglich an eine vorgegebene Stelle weitergereicht werden. Um den Fluss der Daten zu kontrollieren und insbesondere, um die Richtung des Datenflusses zu kontrollieren, wird der Zugang zu der Kommunikationseinrichtung mittels Authentifizierungsmechanismen abgesichert. Durch diese Maßnahme mag auch sichergestellt werden, dass im Wesentlichen kein unberechtigter Teilnehmer eine solche Punkt-zu-Punkt-Verbindung nutzen kann. Durch das Verwenden von Authentifizierungsmechanismen mag somit vorgesehen sein, dass nur berechtigte Auswerteeinrichtungen Kontakt mit der Feldgerätevorrichtung aufnehmen können, auch wenn eine Kommunikation über die rein physikalische Verbindungsebene möglich wäre. Die Kommunikationseinrichtung mag daher Daten verwerfen, die von nicht authentifizierten Teilnehmern bereitgestellt werden.

Um ein Zugangsnetz bereitzustellen, ist in der Feldgerätevorrichtung eine Authentifizierungseinrichtung vorhanden, wobei die Authentifizierungseinrichtung eingerichtet ist, die Berechtigung einer Auswerteeinrichtung für die gewünschte Handlung zu überprüfen, bevor die Kommunikationsdaten weiterverarbeitet werden, und erst nach einer erfolgreichen Feststellung der Berechtigung für die Weitergabe der Daten zu sorgen.

Gemäß einem weiteren Aspekt der vorliegenden Erfindung ist die Kommunikationseinrichtung eingerichtet Zugangsdaten, die die Kommunikationseinrichtung zum Anmelden an das Kommunikationsnetz verwendet, zum direkten Verbinden mit der Auswerteeinrichtung zu nutzen.

Um sich an einem Kommunikationsnetz anzumelden, mögen beispielweise die Zugangsdaten in einem Register in der Kommunikationseinrichtung der Feldgerätevorrichtung hinterlegt sein. Für den Anmeldevorgang bei dem Kommunikationsnetz, mag die Kommunikationseinrichtung auf eine Anfrage reagieren, die von dem Kommunikationsnetz initiiert wird. Danach mag die Kommunikationseinrichtung die Authentifizierungsdaten oder Zugangsdaten bereitstellen. Die Zugangsdaten können beispielsweise einen Benutzernamen, ein Passwort oder eine SSID alleine oder in einer beliebigen Kombination aufweisen.

Die Rolle der Kommunikationseinrichtung und dadurch die Rolle der Feldgerätevorrichtung kann sich von einem Client zu einem Server wandeln und umgekehrt. Wenn sich die Rolle, der Zustand oder der Betriebsmodus der Feldgerätevorrichtung von einem Client zu einem Server wandelt, ist die Feldgerätevorrichtung nicht mehr der Teilnehmer oder Client an dem Kommunikationsnetz, sondern sie stellt selbst das Kommunikationsnetz und insbesondere das Kommunikationszugangsnetz bereit, an dem sich andere Einrichtungen anmelden können. In diesem direkten Betriebsmodus, mag die Feldgerätevorrichtung Authentifizierungsdaten von einer Auswerteeinrichtung verlangen, die den direkten Zugang zu der Feldgerätevorrichtung anfrage. Um die Authentifizierungsdaten anzufordern, mag die Feldgerätevorrichtung die Rolle des Authentifizierungsservers übernehmen und eine Aufforderung zur Angabe der Authentifizierungsdaten an die Auswerteeinrichtung richten, die sich mit der Feldgerätevorrichtung auf direktem Weg verbinden möchte. Folglich mag sich bei der Auswahl der direkten Verbindung gegenüber der Anmeldung an dem Kommunikationsnetz aus Sicht der Kommunikationseinrichtung die durchgeführte Anmeldeprozedur ändern und insbesondere mag sich die Anmeldeprozedur umkehren.

In dem Fall, in dem sich die Feldgerätevorrichtung bei dem Kommunikationsnetz anmeldet, reagiert die Feldgerätevorrichtung auf eine Anforderung des Kommunikationsnetzes oder des Kommunikationszugangsnetzes, die Authentifizierungsdaten bereitzustellen. Diese Authentifizierungsdaten oder Zugangsdaten sind dieselben, die die Feldgerätevorrichtung von der Auswerteeinrichtung in dem Fall anfordert, in dem die Feldgerätevorrichtung eine direkte Verbindung anbietet.

Zusammenfassend mag die Kommunikationseinrichtung der Feldgerätevorrichtung wahlweise als Authentifizierungsclient oder als Authentifizierungsserver eingesetzt werden. Für die unterschiedliche Nutzung mag in einem Beispiel wahlweise ein Programmcode geladen werden, der die Funktion als Client gewährleistet, um sich selbst bei einem Kommunikationszugangsnetz anzumelden. Jedoch mag der Programmcode eines Authentifizierungsservers geladen werden, wenn die Feldgerätevorrichtung das Kommunikationszugangsnetz oder die direkte Verbindung für andere Einrichtungen bereitstellt.

Gemäß noch einem anderen Aspekt der vorliegenden Erfindung ist das Kommunikationsnetz und/oder das Kommunikationszugangsnetz ein Funknetz oder drahtloses Netz.

Beispielsweise mag die Kommunikationseinrichtung zum Bereitstellen einer direkten Verbindung die Funktion eines Access Points, insbesondere eines Wireless Access Point einnehmen. Die Funktechnologie mag ein schnelles Umschalten zwischen Kommunikationsnetzen ermöglichen, bei denen sich eine Auswerteeinrichtung anmelden kann, so dass eine Anmeldung entweder direkt oder indirekt erfolgen kann. Beispielsweise kann bei einem Ausfall eines Funkkommunikationsnetzes auf ein von der Feldgerätevorrichtung bereitgestelltes Funknetz übergegangen werden, ohne eine Verdrahtung zu ändern. Es mag zur Umschaltung des Netzes im Wesentlichen lediglich eine Umkehr des Authentifizierungsprozesses stattimden, wobei zwischen der Rolle als Client und Server umgeschaltet wird. So beispielsweise auch, wenn sich die Feldgerätevorrichtung und/oder die Auswerteeinrichtung aus der Reichweite des Kommunikationsnetzes bewegen und sodann eine direkte Verbindung miteinander herstellen.

Gemäß noch einem anderen Aspekt der vorliegenden Erfindung mag die Feldgerätevorrichtung eine Umschalteinrichtung aufweisen, die eingerichtet ist, die Kommunikationseinrichtung zwischen zumindest dem ersten Betriebsmodus und dem zweiten Betriebsmodus umzuschalten.

In dem ersten Betriebsmodus mag die Kommunikationseinrichtung über das Kommunikationsnetz indirekt mit der Auswerteeinrichtung verbindbar sein. In dem zweiten Betriebsmodus mag die Kommunikationseinrichtung direkt mit der Auswerteeinrichtung verbindbar sein. In dem ersten Betriebsmodus mag somit die Kommunikationseinrichtung über das Kommunikationsnetz erreichbar sein. In dem zweiten Betriebsmodus mag die Kommunikationseinrichtung im Wesentlichen lediglich über einen direkten Zugang erreichbar sein. Um diese Zustände unterscheiden zu können, mag in dem ersten Betriebsmodus die Kommunikationseinrichtung derart eingerichtet sein, dass sie auf eine Authentifizierungsanfrage von dem Kommunikationsnetz reagieren kann und die Zugangsdaten bereitstellt aber selbst keine Anfrage generiert. In dem zweiten Betriebsmodus mag die Kommunikationseinrichtung derart eingerichtet sein, dass sie eine Authentifizierungsanfrage an eine Auswerteeinrichtung bereitstellt und empfangene Zugangsdaten verifiziert.

Es ist aber auch möglich, eine Vielzahl von Auswerteeinrichtungen an der Feldgerätevorrichtung zu betreiben, wobei eine Auswerteeinrichtung über eine direkte Verbindung verbindbar ist, während eine andere Auswerteeinrichtung über ein Kommunikationsnetz verbindbar ist. Im Wesentlichen mag die Kommunikationseinrichtung eine Vielzahl von Instanzen aufweisen, die jeweils wahlweise in dem ersten oder dem zweiten Betriebsmodus betrieben werden. So mag es möglich sein, gleichzeitig direkte Verbindungen mit einer Gruppe von Auswerteeinrichtungen bereitzustellen und indirekte Verbindungen mit einer anderen Gruppe von Auswerteeinrichtungen. In einem Beispiel kann auch nur eine einzige Kommunikationseinrichtung genutzt werden, welche ein Gruppe von Schnittstellen aufweist, die für direkte Verbindungen konfiguriert sind und/oder die eine andere Gruppe von Schnittstellen aufweist, die für indirekte Verbindungen konfiguriert sind In einem Beispiel weist die Kommunikationseinrichtung mehrere Schnittstellen mit jeweils eigenen Zugangsdaten auf.

Gemäß noch einem anderen Aspekt der vorliegenden Erfindung weist die Feldgerätevorrichtung eine Zustandserkennungseinrichtung auf. Eine Zustandserkennungseinrichtung mag eingerichtet sein zu erkennen, in welchem Zustand oder in welchem Einsatzzustand sich die Feldgerätevorrichtung zu einem bestimmten Zeitpunkt befindet. Dieser Einsatzzustand mag unabhängig von dem ersten Betriebsmodus und dem zweiten Betriebsmodus erkannt werden. Jedoch mag in Abhängigkeit von dem erkannten Einsatzzustand die Zustandserkennungseinrichtung auswählen, ob die Kommunikationseinrichtung indirekt oder direkt mit der Auswerteeinrichtung verbindbar ist.

In anderen Worten kann mittels der Zustandserkennungseinrichtung der erste Betriebsmodus oder der zweite Betriebsmodus der Kommunikationseinrichtung oder einer beliebigen Instanz der Kommunikationseinrichtung gewählt werden. Die Zustandserkennungseinrichtung mag eingerichtet sein, zu erkennen, in welchem Einsatzzustand sich die Feldgerätevorrichtung befindet und in Abhängigkeit von dem erkannten Einsatzzustand zu wählen, ob die Kommunikationseinrichtung mit der Auswerteeinrichtung über das Kommunikationsnetz verbindbar ist oder direkt verbindbar ist.

Die Zustandserkennungseinrichtung mag auch eine Zeit berücksichtigen, für wie lange ein bestimmter Einsatzzustand anhält. Beispielsweise mag die Zustandserkennungseinrichtung erkennen, dass ein Kommunikationsnetz ausgefallen ist oder außer Reichweite ist und dabei bestimmen, wie lange dieser Einsatzzustand der Nichterreichbarkeit des Kommunikationsnetzes anhält, bevor sie einen neuen Betriebsmodus für die Kommunikationseinrichtung wählt. So mag beispielsweise verhinderbar sein, dass bei einem kurzen Netzausfall oder bei einem Neustart oder Reboot sofort von dem ersten Betriebsmodus in den zweiten Betriebsmodus umgeschaltet wird. Diese Wartezeit mag eine Hysterese erzeugen, um zu verhindern, dass ein schnelles Hin- und Herschalten zwischen verschiedenen Verbindungsarten erfolgt.

Außerdem mag die Zustandserkennungseinrichtung eingerichtet sein, festzustellen, wie viele und auch welche Auswerteeinrichtungen eine aktive Kommunikationsverbindung mit dem Feldgerät betreiben, beispielsweise auf einer höheren Ebene des OSI-Modells. Nach einem Netzausfall kann so beispielsweise verhindert werden, dass sich neue Geräte an der Feldgerätevorrichtung anmelden, die vor dem Ausfall noch nicht verbunden waren, um eine Überlastung der dann autark betriebenen Feldgerätevorrichtung zu verhindern. Beispielsweise kann als Kriterium für das Erkennen der Auswerteeinrichtungen, welche sich noch verbinden dürfen, eine MAC (Media Access Control)-Adresse als Zugangsdatum überprüft werden. Andere Auswahlkriterien, nach denen die Anzahl der zugelassenen Auswerteeinrichtungen ausgewertet wird, mögen in einer entsprechenden Liste geführt werden. Es mag eine beliebige Kombination von einzelnen Zugangsdaten möglich sein, die für den indirekten und/oder direkten Zugang überprüft werden.

Der erste Betriebsmodus mag ein Client-Betriebsmodus sein, während der zweite Betriebsmodus ein Server-Betriebsmodus und/oder ein Access Point-Betriebsmodus ist.

Gemäß noch einem anderen Aspekt der vorliegenden Erfindung mag die Zustandserkennungseinrichtung eingerichtet sein, den Zustand oder Einsatzzustand der Feldgerätevorrichtung mittels einer Kenngröße zu erkennen, wobei die Kenngröße aus einer Gruppe von Kenngrößen ausgewählt ist. Diese Gruppe von Kenngrößen besteht aus einer Signalstärke, einem Kommunikationsnetzverfügbarkeitssignal, einer Geoinformation, einem Zeitpunkt oder Zeitraum, sowie einem Registereintrag. Als Zeitraum können beispielsweise bestimmte Wochentage und/oder bestimmte Zeitintervalle gewählt werden.

Über die Signalstärke kann beispielsweise festgestellt werden, dass die Feldgerätevorrichtung aus der Reichweite eines Kommunikationsnetzes gelangt ist und somit selbst den Zugang oder eine Zugangsinfrastruktur bereitstellen muss, um die Kommunikation mit einer Auswerteeinrichtung aufrecht zu erhalten. Ein Kommunikationsnetzverfügbarkeitssignal kann beispielsweise ein Pilotsignal oder eine Verfügbarkeitskennung sein, die in regelmäßigen Abständen oder permanent zwischen einem Kommunikationsnetz und der Kommunikationseinrichtung ausgetauscht werden, um zu signalisieren, dass noch eine gültige Netzwerkverbindung vorliegt. Diese Verfügbarkeitskennung kann auch in einem eigenen Kanal übertragen werden. Die Geoinformation mag eine Aussage über den Standort der Feldgerätevorrichtung liefern, an der sich die Feldgerätevorrichtung befindet. So kann beispielsweise ein ortsabhängiges Umschalten zwischen den verschiedenen Verbindungsarten oder Betriebsmodi durchgeführt werden. Folglich mag das Umschalten zwischen der Rolle als Client und Server ortsabhängig erfolgen. In einem anderen Beispiel kann ein Registereintrag über eine Bedieneinrichtung, eine grafische Benutzeroberfläche oder einen Webbrowser eingestellt werden, wodurch der Betriebsmodus als Client oder Server festgelegt wird.

Zudem kann die Verfügbarkeit der Betriebsmodi zeitlich definiert werden, so dass beispielsweise eine direkte Verbindung nur zu gewissen vorgebbaren Zeiten zur Verfügung gestellt wird. So kann beispielsweise festgelegt werden, dass eine direkte Verbindung nur an Werktagen zwischen 8:00 - 18:00 möglich ist.

Gemäß einem anderen Aspekt der vorliegenden Erfindung ist die Kommunikationseinrichtung eingerichtet, einen bidirektionalen Kommunikationskanal zum Bereitstellen des Messwertes und/oder zum Empfangen des Kommandos mit der Auswerteeinrichtung oder dem Auswertegerät herzustellen.

Dieser Kommunikationskanal mag ein Kommunikationskanal auf einer höheren Schicht als die Zugangsverbindung sein. Über diesen Kanal kann ein Informationsaustausch zwischen der Auswerteeinrichtung und der Feldgerätevorrichtung erfolgen. Dieser Informationsaustausch kann beispielsweise ein Abfragekommando oder einen Abfragebefehl aufweisen, mit dem ein ermittelter Messwert abgefragt werden kann. Er kann einen Parameter aufweisen, der in der Feldgerätevorrichtung eingestellt werden soll. Es kann aber auch eine Push-Information vorgesehen sein, mit der über diesen Kommunikationskanal ein ermittelter Messwert bereitgestellt wird. Der Kommunikationskanal mag unabhängig von einer Zugangsverbindung zu dem Kommunikationsnetz sein.

Es soll angemerkt werden, dass unterschiedliche Aspekte der Erfindung in Bezug auf unterschiedliche Gegenstände beschrieben wurden. Insbesondere wurden einige Aspekte in Bezug auf Vorrichtungsansprüche beschrieben, wohingegen andere Aspekte mit Bezug auf Verfahrensansprüche beschrieben wurden. Ein Fachmann kann jedoch der vorangehenden Beschreibung und der folgenden Beschreibung entnehmen, dass, außer es ist anders beschrieben, zusätzlich zu jeder Kombination von Merkmalen, die zu einer Kategorie von Gegenständen gehört, auch jede Kombination zwischen Merkmalen als von diesem Text offenbart angesehen wird, die sich auf unterschiedliche Kategorien von Gegenständen beziehen. Insbesondere sollen Kombinationen zwischen Merkmalen von Vorrichtungsansprüchen und Merkmalen von Verfahrensansprüchen offenbart sein.

### Kurze Beschreibung der Figuren

Im Folgenden werden weitere exemplarische Ausführungsbeispiele der vorliegenden Erfindung mit Verweis auf die Figuren beschrieben.

Die Fig. 1 zeigt eine Feldgerätevorrichtung mit verschiedenen Verbindungen zu Auswertegeräten gemäß einem exemplarischen Ausführungsbeispiel der vorliegenden Erfindung.

Die Fig. 2 zeigt eine indirekte Verbindung zwischen einer Feldgerätevorrichtung und einer Auswerteeinrichtung über ein Kommunikationsnetz gemäß einem exemplarischen Ausführungsbeispiel der vorliegenden Erfindung.

Die Fig. 3 zeigt eine direkte Verbindung zwischen einer Feldgerätevorrichtung und einer Auswerteeinrichtung gemäß einem exemplarischen Ausführungsbeispiel der vorliegenden Erfindung.

Die Fig. 4 zeigt ein Flussdiagramm für ein Verfahren zum Kommunizieren einer Feldgerätevorrichtung mit einer Auswerteeinrichtung gemäß einem exemplarischen Ausführungsbeispiel der vorliegenden Erfindung.

### Detaillierte Beschreibung von Ausführungsbeispielen

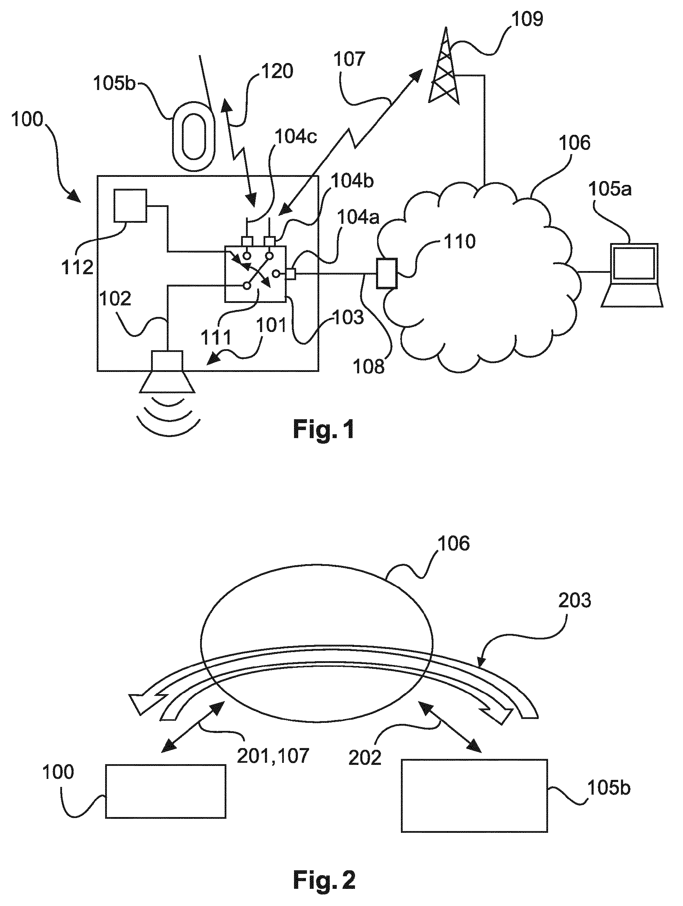

Die Darstellungen in den Figuren sind schematisch und nicht maßstäblich. In der folgenden Beschreibung der Fig. 1 bis Fig. 4 werden die gleichen Bezugszeichen für gleiche oder sich entsprechende Elemente verwendet.

Die Fig. 1 zeigt eine Feldgerätevorrichtung mit verschiedenen Verbindungen zu Auswertegeräten gemäß einem exemplarischen Ausführungsbeispiel der vorliegenden Erfindung. Die Feldgerätevorrichtung 100 oder das Feldgerät 100 weist eine Messeinrichtung 101 auf. Diese Messeinrichtung 101 oder der Messsensor 101 kann Messwerte, beispielsweise Füllstände, Grenzstände, Temperaturen oder Drücke, mit unterschiedlichen physikalischen Messprinzipien ermitteln. Beispiele für Messprinzipien sind eine geführte Mikrowelle oder eine geführte Radarwelle, eine sich frei ausbreitende elektromagnetische Welle, eine sich frei ausbreitende Radarwelle, eine sich frei ausbreitende Schallwelle, eine Temperaturmessung oder eine Druckmessung. Über die Verbindungsleitung 102 ist die Messeinrichtung 101 mit der Kommunikationseinrichtung 103 verbunden. Diese Verbindungsleitung 102 wird genutzt, Messwerte an die Kommunikationseinrichtung 103 weiter zugeben oder Parameter von der Kommunikationseinrichtung zu empfangen.

Die Kommunikationseinrichtung 103 weist die drei Netzwerkschnittstellen 104a, 104b, 104c auf. Über diese Netzwerkschnittstellen 104a, 104b, 104c ist die Feldgerätevorrichtung 100 mit einer Auswerteeinrichtungen 105a, 105b verbindbar. Die Kommunikationseinrichtung 103 kann eine einzige Verbindung zu Auswertegeräten zulassen oder eine Vielzahl paralleler Verbindungen. Diese Verbindungen können unabhängig von einander durch das Einstellen eines entsprechenden Betriebsmodus als direkte oder indirekte Verbindungen festgelegt werden. In Fig. 1 ist die Auswerteeinrichtung 105b über eine direkte Verbindung mit der Kommunikationseinrichtung 103 verbunden, während die Auswerteeinrichtung 105a über das Kommunikationsnetz 106 indirekt mit der Kommunikationseinrichtung verbunden ist. Dabei ist für jede der Schnittstellen 104a, 104b, 104c ein individueller Benutzerkontext vorgesehen. Insbesondere verwaltet jede der Schnittstellen eigene Zugangsdaten, die sich von Schnittstelle zu Schnittstelle unterscheiden. Im Fall, dass nur eine Auswerteeinrichtung angeschlossen werden kann, ist ein einziges Set an Zugangsdaten oder ein einziges Zugangsdatum vorgesehen.

Bei der indirekten Verbindung über das Kommunikationsnetz 106 kann eine drahtlose Zugangsverbindung 107 oder eine drahtgebundene Zugangsverbindung 108 eingesetzt werden. Der drahtlose Link 107 und der drahtgebundene Link 108 reicht jeweils nur von der Kommunikationseinrichtung 103 zu dem Kommunikationsnetz 106. Das Kommunikationsnetz 106 stellt entsprechende Netzzugangspunkte 109, 110 zur Verfügung, die die Links 107, 108 auf unterer Ebene terminieren.

Mittels einer Wahleinrichtung 111 oder Umschalteinrichtung 111 kann ein Betriebsmodus der Kommunikationseinrichtung 103 ausgewählt werden. Es ist möglich, zwischen dem direkten Verbindungsmodus über die Schnittstelle 104c und dem indirekten Verbindungsmodus über ein Kommunikationsnetz 106 und über die Schnittstellen 104b oder 104a umzuschalten. Die Schnittstellen 104c, 104b sind als drahtlose Schnittstellen dargestellt, während die Schnittstelle 104a als netzgebundene Schnittstelle oder Festnetzschnittstelle dargestellt ist. Im Falle des Einsatzes eines drahtgebundenen Zugangs mag der Vorgang des Umschaltens zwischen direktem und indirekten Betriebsmodus auch das Umstecken der Zugangsverbindung 108 aufweisen.

In einem weiteren Ausführungsbeispiel der vorliegenden Erfindung kann die Netzschnittstelle 104b, mit der eine Verbindung zu einem Kommunikationsnetz 106 hergestellt wird, auch durch Umschalten des Betriebsmodus genutzt werden, um die direkte Verbindung mit der Auswerteeinrichtung 105b herzustellen. Genauso kann die direkte Verbindung 120 auch zu einer indirekten Verbindung umgeschaltet werden. So kann auch die Verbindung über Link 120 und Link 107 als die Darstellung eines Interfaces 104 zu unterschiedlichen Zeitpunkten 104a, 104b aufgefasst werden. Der Wahlschalter 111 ist bei dem Umschalten derselben Schnittstelle zwischen unterschiedlichen Betriebsmodi kein mechanischer Schalter, so wie in Fig. 1 dargestellt, sondern ein logischer Schalter, der beispielsweise durch das Laden unterschiedlichen Programmcodes einen Betriebsmodus umschaltet. In einem anderen Beispiel kann der Schalter das Laden eines unterschiedlichen Benutzerkontext für den jeweiligen Betriebsmodus vorsehen. Der Benutzerkontext mag die Zugangsdaten für eine bestimmte Auswerteeinrichtung aufweisen. Beispielsweise kann von einem Client-Betriebsmodus zum Zugang in das Kommunikationsnetz 106 zu einem Server-Betriebsmodus umgeschaltet werden, um den Zugang der Auswerteeinrichtung 105b zu der Kommunikationseinrichtung 103 zu ermöglichen.

Im Wesentlichen mag das Umschalten des Betriebsmodus durch das Umschalten der Richtung durchgeführt werden, in der die Authentifizierung erfolgt. In dem indirekten Betriebsmodus, der eine Verbindung der Auswerteeinrichtung 105a über das zwischengeschaltete Kommunikationsnetz 106 vorsieht, mag die Kommunikationseinrichtung 103 in ihr gespeicherte Authentifizierungsmerkmale oder Zugangsdaten an das Netzwerk 106 bereitstellen. In dem direkten Verbindungsmodus fragt die Kommunikationseinrichtung 103 jedoch in umgekehrter Richtung die Authentifizierungsdaten von der Auswerteeinrichtung 105b ab. Die drahtlose Verbindung erfolgt dann in beiden Fällen über die drahtlose Schnittstelle 104c oder 104b. Die Zugangsdaten können eine Netzkennung SSID und ein Passwort sein.

Auch wenn in Fig. 1 unterschiedliche Auswertegeräte 105a, 105b dargestellt sind, mag es sich in der Regel bei diesen Auswertegeräten um ein und das selbe Auswertegerät handeln. Beispielsweise kann die Auswerteeinrichtung 105a sowohl eine drahtgebundene Netzwerkschnittstelle und eine drahtlose Netzwerkschnittstelle aufweisen oder die drahtlose Auswerteeinrichtung 105b kann sich sowohl über die drahtlose Schnittstelle 104c, 104b der Kommunikationseinrichtung 103 direkt verbinden als auch über den drahtlosen Zugangspunkt 109 des Kommunikationsnetzes 106.

Die Umschalteinrichtung 111, der Schalter 111 oder die Betriebsmoduswahleinrichtung 111 wird von der Zustandserkennungseinrichtung 112 gesteuert. Die Zustandserkennungseinrichtung 112 kann den aktuell vorliegenden Zustand beispielsweise anhand einer Signalstärke, eines Kommunikationsnetzverfügbarkeitssignals, einer Geoinformation, eines Zeitpunkts oder Zeitraums, oder eines Registereintrags in der Feldgerätevorrichtung 100 erkennen und den zugehörigen Betriebsmodus einstellen.

Fig. 2 zeigt eine indirekte Verbindung zwischen einer Feldgerätevorrichtung und einer Auswerteeinrichtung über ein Kommunikationsnetz gemäß einem exemplarischen Ausführungsbeispiel der vorliegenden Erfindung. Die Feldgerätevorrichtung 100 ist über einen Link 201, der drahtlos 107 oder drahtgebunden 108 sein kann, mit dem Kommunikationsnetz 106 verbunden. Ebenso ist die drahtlose Auswerteeinrichtung 105b über einen drahtlosen Link 202 oder (nicht in Fig. 2 gezeigt) die drahtgebundene Auswerteeinrichtung 105a über einen drahtgebundenen Link 202 mit dem Kommunikationsnetz 106 verbunden. Zum Herstellen der Verbindungen 201, 202, insbesondere der Zugangsverbindungen 201, 202, nutzen die Feldgerätevorrichtung 100 und die Auswerteeinrichtung 105b die gleichen Anmeldedaten.

Bei dem Kommunikationsnetz 106 kann es sich um ein drahtloses Netz handeln, beispielsweise ein WLAN, GSM, UMTS oder LTE, wobei sich die Definition als drahtloses Netz im Wesentlichen von der eingesetzten Zugangstechnologie für das Netz 106 ableitet. Die Feldgerätevorrichtung 100 und die Auswerteeinrichtung 105b sind über das Kommunikationsnetz 106 indirekt verbunden, da zwischen ihnen das Kommunikationsnetz 106 angeordnet ist. Der Zugang zu dem Kommunikationsnetz 106 erfolgt auf einer unteren Schicht des OSI-Referenzmodells.

Zum Austausch von Informationen, beispielsweise zum Austauschen von Messwerten oder Daten zum Einstellen von Parametern (Parametrierdaten), ist die bidirektionale Kommunikationsverbindung 203 eingerichtet, die auf einer höheren Ebene als die Zugangsverbindungen 201, 202 liegt, wodurch die Zugangsverbindung und die Kommunikationsverbindung voneinander unabhängig sind. Damit ein Verbindungsaufbau über die Zugangsverbindung 201 und 202 von der Auswerteeinrichtung 105b zu der Feldgerätevorrichtung 100 über das Kommunikationsnetz 106 erfolgen kann, wird die Feldgerätevorrichtung 100 in die vorhandene Infrastruktur eingebunden, welche von dem drahtlosen Kommunikationsnetz 106 gebildet wird. Zu diesem indirekten Einbinden muss die Feldgerätevorrichtung 100 keine Zugangsmöglichkeit zur Verfügung stellen. Die Verbindung zwischen Auswerteeinrichtung 105b, 105a und Feldgerätevorrichtung 100 erfolgt auf der höheren Ebene über entsprechende Kommunikationsverbindungen 203.

Bei mobilen Feldgerätevorrichtungen 100 kann es vorkommen, dass diese sowohl innerhalb einer vorhandenen Infrastruktur 106 verwendet werden sollen als auch, dass die mobilen Feldgerätevorrichtungen 100 autark verwendet werden sollen. Die Fig. 1 zeigt mit den Schnittstellen 104a, 104 b den Betrieb einer Feldgerätevorrichtung 100 in der vorhandenen Infrastruktur 106.

Die in der Feldgerätevorrichtung 100 gespeicherten Zugangsdaten dieser Infrastruktur 106 werden dazu verwendet, dass sich die Feldgerätevorrichtung 100 an der Infrastruktur 106 als ein zulässiger Netzwerkteilnehmer oder Client anmeldet. Bei den Zugangsdaten kann es sich um ein einziges Zugangsdatum handeln und/oder um ein Set von Zugangsdaten, also zumindest zwei Parameter für eine erfolgreiche Anmeldung. Nach der Anmeldung und Registrierung ist die Feldgerätevorrichtung 100 für alle anderen Netzwerkteilnehmer dieser Infrastruktur 106 sichtbar, beispielsweise für die Auswerteeinrichtung 105b. Das mag in anderen Worten bedeuten, dass auf Grundlage einer Verbindung auf einer niedrigen Schicht des OSI-Protokolls eine Verbindung 203 auf einer höheren Protokollschicht zwischen einem Netzwerkteilnehmer 105b oder einer Auswerteeinrichtung 105b und einer Feldgerätevorrichtung 100 hergestellt werden kann. Die Authentifizierung, d. h. das Registrieren oder Anmelden, an dem Kommunikationsnetz 106 kann über verschiedene Zugangsprotokolle und zugehörige Zugangsdaten erfolgen, wie beispielsweise WEP, WPA, Schlüssel oder Passworte oder auch über auf Datenträgern, wie einer SIM-Karte (Subscriber Identity Module) oder in der Feldgerätevorrichtung 100 selbst gespeicherten Authentifizierungsinformationen.

Die Verbindung zwischen einer Auswerteeinrichtung 105b und einem Feldgerät 100 kann beispielsweise eine IP (Internet Protokoll)-basierte Verbindung sein, die im Wesentlichen auf der OSI-Protokollschicht 3 liegt. Ohne Einschränkung der Allgemeinheit mag es sich bei einer Auswerteeinrichtung 105b auch um eine Anzeigeeinrichtung oder Bedieneinrichtung handeln, mit der Informationen von der Feldgerätevorrichtung 100 empfangen werden können oder Befehle oder Informationen an die Feldgerätevorrichtung 100 verschickt werden können.

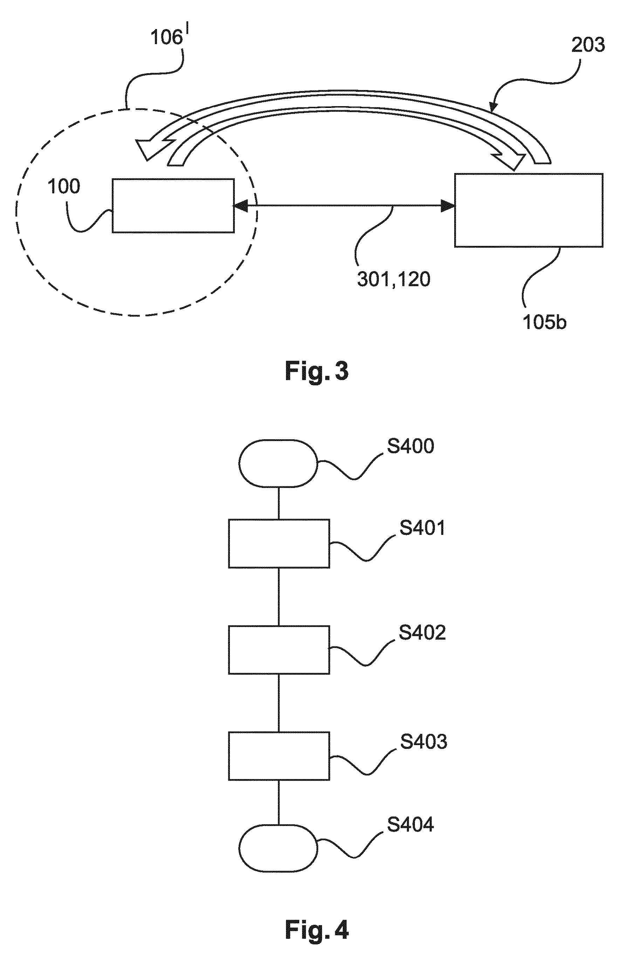

Die Fig. 3 zeigt eine direkte Verbindung zwischen einer Feldgerätevorrichtung und einer Auswerteeinrichtung gemäß einem exemplarischen Ausführungsbeispiel der vorliegenden Erfindung. Zwischen der Feldgerätevorrichtung 100, bei der es sich um eine mobile Feldgerätevorrichtung handeln kann, und der Auswerteeinrichtung 105b wird eine im Wesentlichen direkte Verbindung 301, 120 aufgebaut. Diese direkte Verbindung 301, 120 ist im Beispiel der Fig. 3 drahtlos, erfolgt also über ein Funkprotokoll. Die direkte Verbindung 301, 120 kann aber auch drahtgebunden und durch Umstecken hergestellt werden.

Zum Aufbau der direkten Verbindung 301, 120 werden die in dem Feldgerät 100 oder der Feldgerätevorrichtung 100 gespeicherten Zugangsdaten oder Authentifizierungsdaten, mit denen sich die Feldgerätevorrichtung 100 auch beim Kommunikationsnetz 106 anmelden kann, dazu genutzt, einen Zugangspunkt für andere Netzteilnehmer 105b zur Verfügung zu stellen. Solch ein anderer Netzteilnehmer kann beispielsweise die Auswerteeinrichtung 105b sein, die die Feldgerätevorrichtung 100 als Access Point oder Zugangspunkt nutzt. Die selben Anmeldeinformationen, wie für den Zugangs zum Netz 106, werden zum Authentifizieren der Auswerteeinrichtung 105b in der Feldgerätevorrichtung 100 verwendet. Jedoch wird bei der Bereitstellung des Zugangsnetzes 106' im Gegensatz zum Anmelden an ein Kommunikationsnetz 106 die Feldgerätevorrichtung 100 in einem Servermodus oder im Access Point Modus betrieben. D. h. zum Aufbau der Verbindung 301, 120 wird nach dem Empfang einer Verbindungsanfrage in der Feldgerätevorrichtung 100 von der Feldgerätevorrichtung 100 eine Authentifizierungsanfrage an die Auswerteeinrichtung 105b geschickt, um die Authentifizierungsdaten anzufordern. Nach erfolgreicher Authentifizierung wird die direkte Verbindung 301, 120 ermöglicht.

Zum Ermöglichen der direkten Verbindung simuliert die Feldgerätevorrichtung 100 ein Kommunikationsnetz 106', so dass die Auswerteeinrichtung 105b im Wesentlichen davon ausgeht, sich bei einem Kommunikationsnetz 106 anzumelden.

Die Fig. 2 zeigt somit einen indirekten Betriebsmodus der Feldgerätevorrichtung 100, in der eine Verbindung der Feldgerätevorrichtung 100 mit der Auswerteeinrichtung 105b im Wesentlichen lediglich über das Kommunikationsnetz 106 ermöglicht wird. Die Fig. 3 zeigt hingegen einen direkten Betriebsmodus, bei dem sich die Auswerteeinrichtung 105b direkt bei der Feldgerätevorrichtung 100 anmeldet, insbesondere an dem simulierten Netz 106'. Die Feldgerätevorrichtung 100 ist folglich für einen mobilen Einsatz eingerichtet, indem sie zwischen beiden Betriebsmodi umschaltbar ist. Das System, welches die Auswerteeinrichtung 105b und die mobile Feldgerätevorrichtung 100 aufweist, kann somit autark betrieben werden.

Bei dem Einsatz einer mobilen Feldgerätevorrichtung 100 kann es vorkommen, dass die Feldgerätevorrichtung 100 sowohl innerhalb einer vorhandenen Infrastruktur 106 als auch autark verwendet wird. Ein Verbindungsaufbau von einer Auswerteeinrichtung 105b mit einer Feldgerätevorrichtung 100 kann somit flexibel gestaltet werden. Es können auch verschiedene Einsatzszenarien berücksichtigt werden. In der Feldgerätevorrichtung 100 selbst kann, beispielsweise durch das Einstellen eines Betriebsmodus, unterschieden werden, ob die Feldgerätevorrichtung 100 sich in eine bestehende Netzinfrastruktur 106 einbindet oder einbindbar ist, oder ob sie selbst die erforderliche Infrastruktur 106' zur Verfügung stellt, um direkt eine Auswerteeinrichtung 105b einzubinden. In beiden Fällen werden die selben Zugangsdaten verwendet.

Durch das Vorsehen der Möglichkeit des Umschaltens zwischen direktem und indirektem Verbindungsmodus, d.h. durch das Vorsehen einer entsprechenden Umschalteinrichtung 111, kann der Verbindungsaufbau von einem mobilen Gerät 105b, wie beispielsweise einem Notebook, Smartphone oder Tablet-PC, zu einer Feldgerätevorrichtung 100 vereinfacht werden. In der Feldgerätevorrichtung 100 sind unabhängig von dem Betriebsmodus die gleichen Zugangsdaten gespeichert. Sie können sowohl zum Anmelden an eine Infrastruktur 106 als auch zum Zulassen einer Verbindung einer Auswertevorrichtung 105a, 105b genutzt werden.

Anhand der Zustandserkennungseinrichtung 112 beispielsweise kann festgestellt werden, dass die mobile Feldgerätevorrichtung 100 außerhalb der Reichweite der Netzinfrastruktur 106 betrieben werden soll oder dass beispielsweise durch einen Defekt die Netzinfrastruktur 106 ausgefallen ist. In solch einem Fall ohne Netzinfrastruktur 106 können für eine Verbindung zwischen der Auswerteeinrichtung 105b und Feldgerätevorrichtung 100 die gleichen Zugangsdaten verwendet werden, um die Kommunikationsverbindung 203 auf einer höheren Ebene herzustellen. Die Umschalteinrichtung 111 sorgt für das Einstellen des entsprechenden Betriebsmodus.

Durch das flexible Umschalten zwischen einem Client-Betriebsmodus, wie in Fig. 2 dargestellt, oder einem Server-Betriebsmodus, wie in Fig. 3 dargestellt, kann eine flexible Handhabung der Feldgerätevorrichtung 100 ermöglicht werden und die Einsatzmöglichkeit erweitert werden.

Die Fig. 4 zeigt ein Flussdiagramm für ein Verfahren zum Kommunizieren einer Feldgerätevorrichtung 100 mit einer Auswerteeinrichtung 105b. In einem Ruhezustand S400 wird in dem Schritt S401 ein Messwert mit einer Messeinrichtung ermittelt. In dem Schritt S402 erfolgt das Kommunizieren der Messeinrichtung mit einer Kommunikationseinrichtung in der Feldgerätevorrichtung 100. Das Ermitteln des Messwerts erfolgt unabhängig von dem Kommunikationsprozess. Im Schritt S403 erfolgt eine Auswahl, ob die Kommunikationseinrichtung 103 indirekt über ein Kommunikationsnetz 106 oder direkt über die direkte Verbindung 301, 120 mit der Auswerteeinrichtung 105a, 105b verbindbar ist. Dazu können Auswertungen des derzeit vorliegenden Einsatzzustands von der Zustandserkennungseinrichtung 112 genutzt werden. Bei der Wahleinrichtung 111 kann es sich um einen mechanischen Schalter oder auch um eine Steuerung mittels ladbarem Programmcode oder veränderbaren Registereinträgen handeln.

Bei der Feldgerätevorrichtung 100 kann es sich um ein Feldgerät, ein Messgerät, ein Füllstandmessgerät, ein Druckmessgerät, ein Grenzstandmessgeräts, ein Impulsmessgerät, ein Radarmessgerät oder ein kapazitives Messgerät handeln.

Beschrieben wird also eine Feldgerätevorrichtung 100, welche zum Kommunizieren mit einer Auswerteeinrichtung 105a, 105b, in einem direkten oder einem indirekten Betriebsmodus betreibbar ist, die beide die selben Zugangsdaten nutzen.

Ergänzend ist darauf hinzuweisen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Feldgerätevorrichtung (100), aufweisend:
eine Messeinrichtung (101);
eine Kommunikationseinrichtung (103);
wobei die Messeinrichtung (101) zum Bestimmen eines Messwerts und zum Kommunizieren mit der Kommunikationseinrichtung (103) eingerichtet ist; und
wobei die Kommunikationseinrichtung (103) eingerichtet ist, für eine Verbindung mit einer Auswerteeinrichtung (105a, 105b) einen Betriebsmodus einzustellen, der aus einem ersten Betriebsmodus und einem zweiten Betriebsmodus wählbar ist;
wobei der erste Betriebsmodus eine indirekte Verbindung mit der Auswerteeinrichtung (105a, 105b) über ein Kommunikationsnetz (106) ermöglicht;
wobei der zweite Betriebsmodus eine direkte Verbindung mit der Auswerteeinrichtung (105a, 105b) ermöglicht;
wobei die indirekte und die direkte Verbindung die Nutzung derselben Übertragungstechnik vorsieht;
**dadurch gekennzeichnet, dass**
die Kommunikationseinrichtung (103) zum wahlweisen Einsatz als Authentifizierungsclient oder als Authentifizierungsserver eingerichtet ist; die Kommunikationseinrichtung (103) eingerichtet ist, Zugangsdaten, die die Kommunikationseinrichtung (103) als Authentifizierungsclient zum Anmelden an das Kommunikationsnetz (106) im ersten Betriebsmodus verwendet, als Authentifizierungsserver zum direkten Verbinden mit der Auswerteeinrichtung (105a, 105b) im zweiten Betriebsmodus von der Auswerteeinrichtung anzufordern und zu nutzen; und
die Kommunikationseinrichtung (103) eingerichtet ist, im zweiten Betriebsmodus einen Verbindungswunsch zu akzeptieren.

2. Feldgerätevorrichtung (100) nach Anspruch 1, wobei die Kommunikationseinrichtung eingerichtet ist, ein Kommunikationszugangsnetz (106') bereitzustellen, um das direkte Verbinden der Kommunikationseinrichtung (103) mit der Auswerteeinrichtung (105a, 105b) zu ermöglichen.

3. Feldgerätevorrichtung (100) nach Anspruch 1 oder 2, wobei das Kommunikationsnetz (106) und/oder das Kommunikationszugangsnetz (107, 120, 108) ein Funknetz ist.

4. Feldgerätevorrichtung (100) nach einem der Ansprüche 1 bis 3, weiter aufweisend:
eine Umschalteinrichtung (111);
wobei die Umschalteinrichtung (111) eingerichtet ist, die Kommunikationseinrichtung (103) zwischen dem ersten Betriebsmodus und dem zweiten Betriebsmodus umzuschalten.

5. Feldgerätevorrichtung (100) nach einem der Ansprüche 1 bis 4, weiter aufweisend:
eine Zustandserkennungseinrichtung (112);
wobei die Zustandserkennungseinrichtung (112) eingerichtet ist, zu erkennen, in welchem Zustand sich die Feldgerätevorrichtung (100) befindet und in Abhängigkeit von dem Zustand zu wählen, ob die Kommunikationseinrichtung (103) im ersten Betriebsmodus oder im zweiten Betriebsmodus betrieben werden soll.

6. Feldgerätevorrichtung (100) nach Anspruch 5, wobei die Zustandserkennungseinrichtung (112) eingerichtet ist, den Zustand mittels einer Kenngröße zu erkennen, ausgewählt aus der Gruppe von Kenngrößen bestehend aus:
einer Signalstärke;
eines Kommunikationsnetz-Verfügbarkeitssignals;
eines Zeitpunkts;
eines Zeitraums;
einer Geo-Information; und
einem Registereintrag.

7. Feldgerätevorrichtung (100) nach einem der Ansprüche 1 bis 6, wobei die Kommunikationseinrichtung (103) eingerichtet ist, einen bidirektionalen Kommunikationskanal (203) zum Bereitstellen des Messwertes und/oder zum Empfangen eines Kommandos mit der Auswertegeräteeinrichtung (105a,105b) herzustellen.

8. Verfahren zum Kommunizieren einer Feldgerätevorrichtung (100) mit einer Auswerteeinrichtung (105a, 105b), das Verfahren aufweisend:
Bestimmen eines Messwerts mit einer Messeinrichtung;
Kommunizieren der Messeinrichtung mit einer Kommunikationseinrichtung (103);
Einstellen eines Betriebsmodus der Kommunikationseinrichtung (103) für eine Verbindung mit einer Auswerteeinrichtung, der aus einem ersten Betriebsmodus und einem zweiten Betriebsmodus wählbar ist;
wobei der erste Betriebsmodus eine indirekte Verbindung über ein Kommunikationsnetz (106) ermöglicht;
wobei der zweite Betriebsmodus eine direkte Verbindung ermöglicht;
wobei die indirekte und die direkte Verbindung die Nutzung derselben Übertragungstechnik vorsieht;
**gekennzeichnet durch**
Anfordern und Nutzen von Zugangsdaten, die die Kommunikationseinrichtung (103) als Authentifizierungsclient zum Anmelden an das Kommunikationsnetz (106) im ersten Betriebsmodus verwendet, als Authentifizierungsserver zum direkten Verbinden mit der Auswerteeinrichtung (105a, 105b) im zweiten Betriebsmodus; und
Akzeptieren eines Verbindungswunschs im zweiten Betriebsmodus.

9. Computerlesbares Speichermedium, auf dem ein Programmcode gespeichert ist, der, wenn er von einem Prozessor ausgeführt wird, das Verfahren nach Anspruch 8 ausführt.

## Claims

1. A field device apparatus (100), comprising:
a measuring device (101); and
a communications device (103);
wherein the measuring device (101)is adapted to determine a measurement value and to communicate with the communications device (103); and
wherein the communications device (103) is adapted to set an operating mode for connection to an evaluation device (105a, 105b), which operating mode can be selected from a first operating mode and a second operating mode;
wherein the first operating mode enables an indirect connection to the evaluation device (105a, 105b) via a communications network (106);
wherein the second operating mode enables a direct connection to the evaluation device (105a, 105b); and
wherein the indirect and the direct connection involves the use of same transmission technology;
**characterized in that**
the communications device (103) is adapted for selectively operating as authentification client or authentification server;
wherein the communications device (103) is adapted to request and use access data, which the communications device uses for logging onto the communications network (106) in the first operating mode, as authentification server for connecting directly to the evaluation device (105a, 105b) in the second operating mode; and
wherein the communications device (103) is adapted to accept a connection request in the second operating mode.

2. The field device apparatus (100) according to claim 1, wherein the communications device is adapted to provide a communications access network (106'), in order to enable the direct connection of the communications device (103) to the evaluation device (105a, 105b).

3. The field device apparatus (100) according to claim 1 or 2, wherein the communications network (106) and/or the communications access network (107, 120, 108)is a radio network.

4. The field device apparatus (100) according to one of claims 1 to 3, further comprising:
a switching device (111);
wherein the switching device (111) is adapted to switch the communications device (103) between the first operating mode and the second operating mode.

5. The field device apparatus (100) according to to one of claims 1 to 4, further comprising:
a status recognition device (112);
wherein the status recognition device (112) is adapted to recognise the current status of the field device apparatus (100) and to select, depending on the status, whether the communications device (103) is to be operated in the first operating mode or in the second operating mode.

6. The field device apparatus (100) according to claim 5, wherein the status recognition device (112) is adapted to recognise the status by a characteristic selected from the group of parameters consisting of:
a signal strength;
a communications network availability signal;
a time point;
a time period;
geoinformatic data; and
a register entry.

7. The field device apparatus (100) according to one of claims 1 to 6, wherein the communications device (103) is adapted to establish a bidirectional communication channel (203) with the evaluation device to make the measurement value available and/or to receive a command.

8. A method for communicating of a field device apparatus (100) with an evaluation device (105a, 105b), the method comprising:
determining a measurement value using a measuring device;
communicating of the measuring device with a communications device (103); and
setting an operating mode of the communications device (103) for connecting to an evaluation device, which operating mode can be selected from a first operating mode and a second operating mode;
wherein the first operating mode enables an indirect connection via a communications network (106);
wherein the second operating mode enables a direct connection;
wherein the indirect and direct connection involve the use of the same transmission technology;
**characterized by**
requesting and using access data, which the communications device (103) uses for logging onto the communications network (106) in the first operating mode, as authentification server for connecting directly to the evaluation device (105a, 105b) in the second operating mode; and
accepting a connection request in the second operating mode.

9. A computer-readable storage medium on which a program code is stored, which, when executed by a processor, performs the method of claim 8.

## Revendications

1. Dispositif d'appareil de terrain (100), comportant :
un dispositif de mesure (101),
un dispositif de communication (103),
dans lequel le dispositif de mesure (101) est adapté pour déterminer une valeur de mesure et pour communiquer avec le dispositif de communication (103), et
dans lequel le dispositif de communication (103) est adapté pour établir un mode de fonctionnement pour une connexion à un dispositif d'évaluation (105a, 105b), lequel mode de fonctionnement peut être choisi entre un premier mode de fonctionnement et un second mode de fonctionnement,
dans lequel le premier mode de fonctionnement permet une connexion indirecte au dispositif d'évaluation (105a, 105b) via un réseau de communication (106),
dans lequel le second mode de fonctionnement permet une connexion directe au dispositif d'évaluation (105a, 105b),
dans lequel la connexion indirecte et la connexion directe impliquent l'utilisation de la même technologie de transmission,
**caractérisé en ce que** le dispositif de communication (103) est adapté pour être utilisé sélectivement en tant que client d'authentification ou en tant que serveur d'authentification,
le dispositif de communication (103) est adapté pour demander et utiliser des données d'accès que le dispositif de communication (103) utilise comme client d'authentification pour ouvrir une session sur le réseau de communication (106) dans le premier mode de fonctionnement, ou comme serveur d'authentification pour se connecter directement au dispositif d'évaluation (105a, 105b) dans le second mode de fonctionnement à partir du dispositif d'évaluation, et
le dispositif de communication (103) est adapté pour accepter une requête de connexion dans le second mode de fonctionnement.

2. Dispositif d'appareil de terrain (100) selon la revendication 1, dans lequel le dispositif de communication est adapté pour fournir un réseau d'accès de communication (106') afin de permettre la connexion directe du dispositif de communication (103) au dispositif d'évaluation (105a, 105b).

3. Dispositif d'appareil de terrain (100) selon la revendication 1 ou 2, dans lequel le réseau de communication (106) et/ou le réseau d'accès de communication (107, 120, 108) sont un réseau radio.

4. Dispositif d'appareil de terrain (100) selon l'une des revendications 1 à 3, comportant en outre :
un dispositif de commutation (111),
dans lequel le dispositif de commutation (111) est adapté pour commuter le dispositif de communication (103) entre le premier mode de fonctionnement et le second mode de fonctionnement.

5. Dispositif d'appareil de terrain (100) selon l'une des revendications 1 à 4, comportant en outre :
un dispositif de détection d'état (112),
dans lequel le dispositif de détection d'état (112) est adapté pour détecter l'état dans lequel se trouve le dispositif d'appareil de terrain (100) et pour choisir en fonction de l'état si le dispositif de communication (103) doit fonctionner dans le premier mode de fonctionnement ou dans le second mode de fonctionnement.

6. Dispositif d'appareil de terrain (100) selon la revendication 5, dans lequel le dispositif de détection d'état (112) est adapté pour détecter l'état au moyen d'une caractéristique choisie parmi le groupe de caractéristiques constitué de :
une intensité de signal,
un signal de disponibilité de réseau de communication,
un temps,
une période,
une information géographique, et
une entrée de registre.

7. Dispositif d'appareil de terrain (100) selon l'une des revendications 1 à 6, dans lequel le dispositif de communication (103) est adapté pour établir un canal de communication bidirectionnelle (203) pour mettre la valeur de mesure à disposition et/ou pour recevoir une commande avec le dispositif d'évaluation (105a, 105b).

8. Procédé pour faire communiquer un dispositif d'appareil de terrain (100) avec un dispositif d'évaluation (105a, 105b), le procédé comportant les étapes consistant à :
déterminer une valeur de mesure avec un dispositif de mesure,
faire communiquer le dispositif de mesure avec un dispositif de communication (103),
régler un mode de fonctionnement du dispositif de communication (103) pour une connexion à un dispositif d'évaluation, qui peut être choisi entre un premier mode de fonctionnement et un second mode de fonctionnement,
dans lequel le premier mode de fonctionnement permet une connexion indirecte par un réseau de communication (106),
dans lequel le second mode de fonctionnement permet une connexion directe,
dans lequel la connexion indirecte et la connexion directe impliquent l'utilisation de la même technologie de transmission,
**caractérisé par** la demande et l'utilisation de données d'accès que le dispositif de communication (103) utilise comme client d'authentification pour s'enregistrer sur le réseau de communication (106) dans le premier mode de fonctionnement et comme serveur d'authentification pour la connexion directe au dispositif d'évaluation (105a, 105b) dans le second mode de fonctionnement, et
accepter une requête de connexion dans le second mode de fonctionnement.

9. Support de mémorisation lisible par ordinateur, sur lequel est mémorisé un code de programme qui, lorsqu'il est exécuté par un processeur, met en oeuvre le procédé selon la revendication 8.
